Europäisches Patentamt

European Patent Office

Office européen des brevets

(11) Publication number: **0 428 065 A2**

## EUROPEAN PATENT APPLICATION

(21) Application number: 90121371.0

(22) Date of filing: 08.11.90

(51) Int. Cl.5: **E04F 17/08**

(30) Priority: 15.11.89 IT 8261189

(43) Date of publication of application:
22.05.91 Bulletin 91/21

(84) Designated Contracting States:
AT BE CH DE DK ES FR GB GR IT LI LU NL SE

(71) Applicant: **Colomban, Massimo**
**Via Caldevie, 18**
**I-31025 S. Lucia Di Piave (Treviso)(IT)**

(72) Inventor: **Colomban, Massimo**
**Via Caldevie, 18**
**I-31025 S. Lucia Di Piave (Treviso)(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) Method for producing raceways particularly in floors.

(57) Method for producing raceways, particularly in floors, including the step of resting at least one shaped structure (3) which defines a plurality of adjacent and parallel raceways (6) on a floor slab (1) preferably with the interposition of a layer of insulating material (2); further steps include casting a levelling foundation (5) above the structure and covering with flooring (4).

Fig.1

EP 0 428 065 A2

# METHOD FOR PRODUCING RACEWAYS PARTICULARLY IN FLOORS

The present invention relates to a method for producing raceways particularly in floors.

The invention is particularly bur not exclusively applicable as a system for producing a technological floor or floors used in industrial buildings such as offices and the like.

Conventional buildings are known in the current state of the art. In particular, said buildings essentially comprise an external and/or building-supporting part and an internal part which is intended to be divided into appropriate rooms. Traditionally, the flooring was directly in contact with the floor slab, and the related connections for water, electricity etc. were allowed by means of the preliminary provision of raceways defined directly in the slab or rigidly embedded thereon, inside which said connections were arranged. The disadvantages which are evidently observable in this solution and in particular in industrial buildings, therefore in rooms used as offices, are numerous: first of all, as the number of technological connections increase, it is nearly impossible to obtain a versatile and easy distribution of such connections. Furthermore, it most often happens that the connections create an external interference with thae floor, producing fixed limitations, aesthetic shortcommings and a hardly negligible hindrance. All things considered, a disorderly, uncoordinated, and in practice irratio"al distribution of the cables and pipes occurs. Technological evolution has subsequently allowed to produce advanced prefabricated systems of dividing walls, even of the outfitted type.

Technological floors are also included in this context which substantially consist of a structure which is elevated with respect to the slab or actual floor and is produced by means of tiles or boards made of wood, metal or inert materials which generally rest on grid-like supports or have built in feet. A surface which is raised with respect to the floor of the room is thus obtained, and in tne interspace thus provided it is possible to technologically arrange therein telephone, electric, informatic cables and other technological services, not excluding pipes for fluids.

Numerous disadvantages can be observed in the above described solution; among them, it is worth mentioning the fact that the interspace which is created between the raised floor and the slab is dusty and therefore scarcely hygienic due to the obvious difficulty of performing constant cleaning. Said floors are furthermore not sound-deadening, have poor rigidity, especially in a transverse direction, and require periodic maintenance in order to adjust the unavoidable movements of the boards or liles. Said tiles or boards, besides not being sufficiently fireproof, are sensitive to humidity, especially if they are made of wood or inert material, and said humidity can cause dilation phenomena of such force as to disarrange entire floor planes, with obvious undesiderable consequences. Finally, said systems have a rather limited life and a considerable cost as regards both purchase and installation.

The aim of the present invention is to obviate the above described disadvantages.

This aim and other objects are achieved by the present invention according to the characteristics described in the appended claims, solving the described p-oblems by means of a method for producing raceways particularly in floors, which comprises at least one shaped structure which provides a plurality of adjacent and parallel raceways, said structure being arranged or being arrangeable on the floor slab by means of the interposition of a layer of insulating material, and wherein the levelling foundation is cast above the structure and is subsequently covered by flooring.

In this manner, by means of the considerable creative contribution, various advantages are ach eved and lead to an immediate technical progress whicn is essentially constituted by the optimization of the distribution of the utility systems, allowing an effective and rational organization of the various lines: it is sound-deadening, or in any case does not increase the noisiness of the rooms; it increases the fireproofing of the floor slab; it allows maximum versatility, since the required tilities can reach any point.

These advantages and others will become apparent from the following detailed description of preferential embodiment solutions with the aid of the accompanying drawings, the details of execution whereof are not to be understood as limitative but merely as exemplifying.

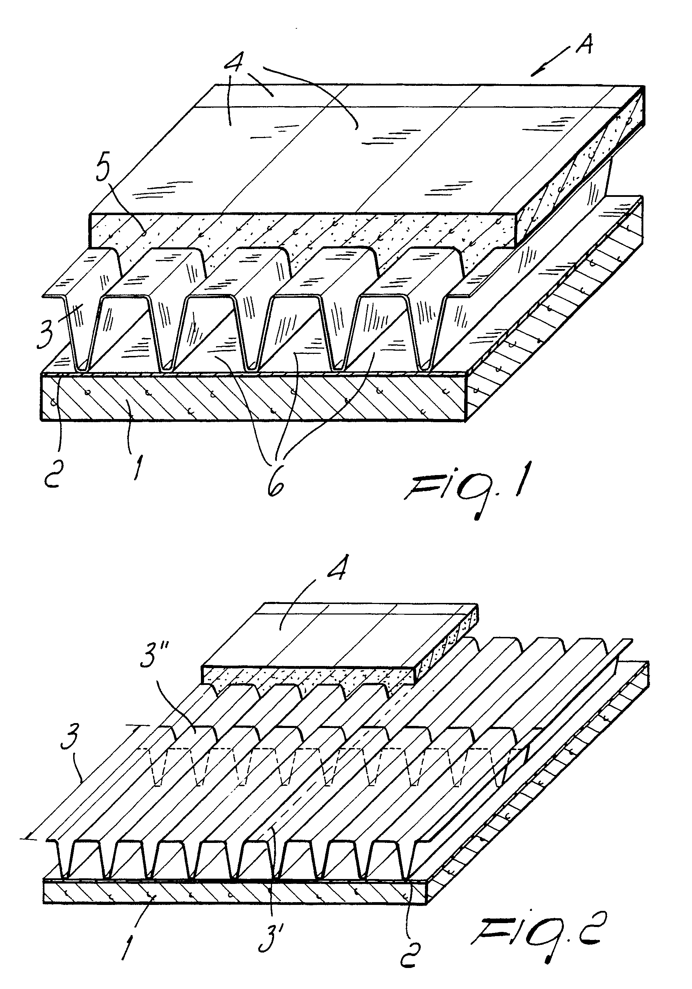

figure 1 is a schematic perspective sectional view of a portion of technological floor obtained by the method of the present invention;

figure 2 is a schematic perspective sectional view of a larger portion of the technological floor of figure 1, in which the coupling of the fretted metal plates is pointed out;

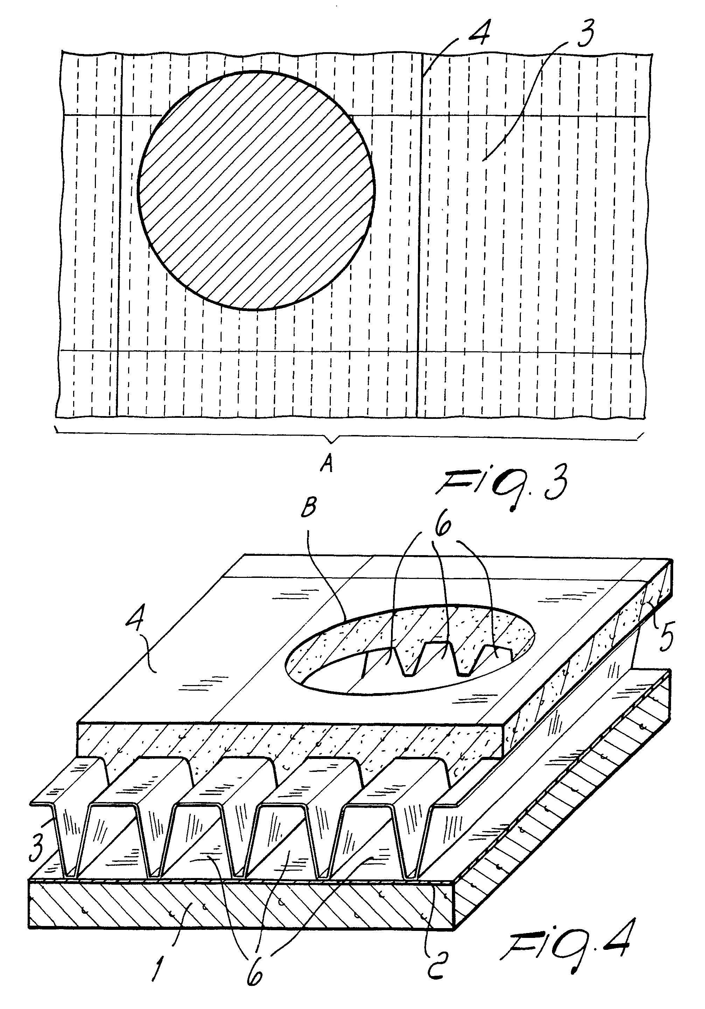

figure 3 is a schematic plan view of an ideal application of the floor according to fi-ure 1;

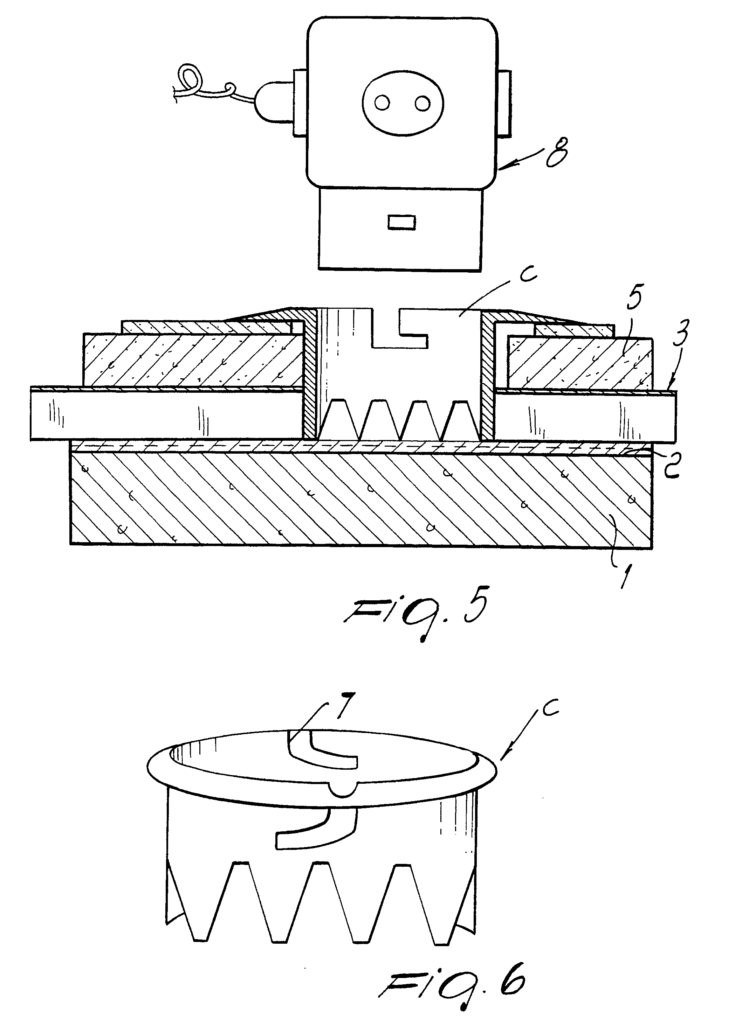

figure 4 is a schematic perspective sectional view of a portion of technological floor obtained from the method of the present invention, in which the hole for intercepting the underlying raceway is pointed out;

figure 5 is a schematic view of a curret which can be inserted in a hole according to figure 4 obtained in said floor to allow connection to the netw rks of the various facilities;

figure 6 is a schematic perspective view of a means with a turret engagement ring which can be arranged inside the hole of figure 4.

With reference to the above figures, it can be seen that a technological floor A obtained by the method of the present invention, is of the type which comprises a known floor slab 1 which is pre-formed or pre-made. A layer of insulating material 2, preferably foamed polyethylene, is applied on the surface of said floor slab 1. Adequately shaped structures 3 are simply rested above said layer of insulating material 2, defining a set of longitudinal, adjacent and parallel interspaces 6 above which, in the specific case, a cement foundation 5 is subsequently cast. The foundation is then naturally provided with flooring 4. More in particular, the structures 3 are constituted by shaped sheets with a fretted pattern, made of galvanized steel or preferably made of plastic material. An unlimited series of parallel but physically separate adjacent channels 6 is thus obtained inside which the necessary cables can be inserted directly. The channels 6 further-more perimetrically intercept a perimetric ring for the gathering and distribution of said cables. The fretted structure 3 is preferably provided in sheets which h ve an essentially rectangular configuration (oblique sides) with variable dimensions, wherein the ends are adapted for the co-planar association of at least one other second sheet 3. In the specific case as indicated in figure 2, each sheet 3 has at least one protruding side with a wing-snaped profile 3′ to allow said profile to couple to a similar wing 3′ defined on the corresponding side of a similar sneet 3. Finally, at least one longitudinal end 3″ has a lower thickness which can be surmounted by the flap opposite to the preceding one of a similar sheet 3 to be associated head-on. A further characteristic of this system provides the possibility of intercepting at least three raceways 6 (in practice the fundamental raceways for telephone, computer, power) by providing a through perforation B in any point of the technological floor A. An annular engagement means C, particularly of the bayonet type 7, for a turret or plug 8 for supporting connection means is positionable inside said perforation B.

The floor A obtained by the method of the present invention advantageously allows, due to the feature of the fretted structure 3, for the transverse interception of at least the three fundamental raceways 6 at the through perforation B in any point of the technological floor.

Where technical features mentioned in any claim are followed by reference signs, those reference signs have been included for the sole purpose of increasing the intelligibility of the claims and accordingly, such reference signs do not have any limiting affect on the scope of each element identified by way of example by such reference signs.

## Claims

1. Method for producing raceways, particularly in floors of the type which comprises a pr.-formed floor slab, characterized in that it comprises the tep of arranging on said floor slab (1), preferably .oy means of the interposition of a layer of insulatin material (2), at least one shaped structure (3) which c mprises a plurality of adjacent and parallel raceways (6), said method further comprising the steps of embedding sald structure in a levelling foundation (5) and of subsequently covering the foundation (5) by flooring (4).

2. Method according to claim 1, characterized in that the step of arranging said at least one shaped structure (3) on said floor slab (1) consists in arranging a shaped structure which is constituted by a plurality of adjacent and parallel raceways and is a frett d sheet (3) which provides a series of longitudinal and co|planar channels (6) which are parallel but physically separa.e.

3. Method according to claim 2, ch racterized in that said fretted sheet (3) is a fretted metal plate made of galvanized steel and/or plastic material.

4. Method according to claim 1, ch racterized in that the preferred step of interpositionLng said layer of insulating material consists in positioning a layer of insulating material (2) which is made of foamed polyethylene.

5. Method according to claims 1 and 2, characterized in that the step of arranging on said floor slab (1) at least one shaped structure consists in arranging a shaped structure which is constituted by a pl rality of adjacent and parallel raceways and is a fretted sheet (3) and which is associated with at least one second sneet (3) and has at least one protruding side with a wing-shaped profile (3′) wherein at least one longitudinal end is provided with a lower thickness.

6. Method according to the preceding claims, characterized in that it further comprises the step of providing a through hole (B) on the technological floor (A) for intercepting the raceways (6), said hole (B) having a diameter which is equal to at least the sum of the three widths of each raceway (6).

7. Method according to the preceding claims, characterized in that it further comprises the step of arranging inside said hole (B) an annular engagement means (C) particularly for the bayonet (7) fixing of a turret (8) for supporting connection means.

8. Method according to the preceding claims, further comprising the step of positioning the raceways (6) such that they perimetrically intercept a primetric gathering and distribution ring particularly for technological connections.

9. Technological floor (A) characerized in that it comprises at least one shaped structure (3) arranged on a pre-formed floor slab (1), said shaped structure (3) comprising a plurality of adjacent and parallel raceways (6), said floor (A) further comprising a levelling foundation (5) in which said shaoed structure (3) is embedded.

10. Floor according to claim 9, characterized in that said shaped structure is a fretted shaped structure (3).

Fig. 1

Fig. 2

Fig.3

Fig.4

Fig. 5

Fig. 6